(19) Europäisches Patentamt
European Patent Office
Office européen des brevets

(11) **EP 1 063 613 A1**

(12) **EUROPEAN PATENT APPLICATION**
published in accordance with Art. 158(3) EPC

(43) Date of publication:
**27.12.2000 Bulletin 2000/52**

(21) Application number: **99902903.6**

(22) Date of filing: **15.02.1999**

(51) Int. Cl.$^7$: **G06T 3/40**

(86) International application number:
**PCT/JP99/00635**

(87) International publication number:
**WO 99/41703 (19.08.1999 Gazette 1999/33)**

(84) Designated Contracting States:
**DE FR GB**

(30) Priority: **17.02.1998 JP 3448798**

(71) Applicant:
**Matsushita Electric Industrial Co., Ltd.
Kadoma-shi, Osaka 571-8501 (JP)**

(72) Inventor: **SHINDO, Yoshikuni
Chigasaki-shi, Kanagawa 253-0086 (JP)**

(74) Representative:
**Lang, Johannes, Dipl.-Ing.
Bardehle Pagenberg Dost Altenburg Geissler
Isenbruck,
Postfach 86 06 20
81633 München (DE)**

(54) **METHOD AND APPARATUS FOR INTERPOLATED PIXEL GENERATION**

(57) To provide an apparatus for generating interpolation pixels to be supplied to a matrix-type display capable of upscaling images so that the contours of characters, for example, on the display may not so conspicuously blurred even if an upscaling rate gets higher. In order to achieve this object, an interpolation curve producing part 20 produces an interpolation curve having a pair of original pixels at ends, and is sloped gradual in the vicinity of the ends but otherwise steep. An interpolation curve deforming part 21 preferably so deforms the interpolation curve, according to the image upscaling rate, that the slope for the section not in the vicinity of the ends gets steeper as the upscaling rate for images gets higher. By using the deformed interpolation curve, an interpolation pixel calculating part 22 calculates an interpolation pixel(s) for interpolation between the pair of original pixels.

F I G. 1

EP 1 063 613 A1

## Description

TECHNICAL FIELD

The present invention relates to apparatuses for generating interpolation pixels and more particularly, to an apparatus for generating interpolation pixels to be interpolated between a pair of original pixels on a matrix-type display capable of displaying upscaled images.

BACKGROUND ART

A matrix-type display such as liquid crystal display has been available in various sizes designed respectively for images having 640 pixels in a lateral direction (X direction) and 400 pixels in a longitudinal direction (that is, 640 by 400), images of 1024 by 768, or images of 1600 by 1200, for example. Further variation is more likely in expectation of the increasing range of uses.

Such matrix-type display is often provided with a function of switching resolution to retain compatibility. In detail, a display designed for images of 1024 by 768 can also display images of 640 by 400, and a display designed for images of 1600 by 1200 can also display images of 640 by 400 and of 1024 by 768.

In this manner, to fully display original images of 640 by 400 on a display designed for images of 1024 by 768, the number of pixels thereof needs to be increased from 640 by 400 to 1024 by 768 by interpolating (inserting) another pixel between the pixels of the original images (hereinafter, original pixels). An apparatus used to generate pixels for interpolation (hereinafter, interpolation pixels) is the apparatus for generating interpolation pixels.

The apparatus for generating interpolation pixels generally generates interpolation pixels on a signal value basis, i.e. brightness of the pixels of the original images (hereinafter, original pixels).

Described below is a conventional method for generating interpolation pixels.

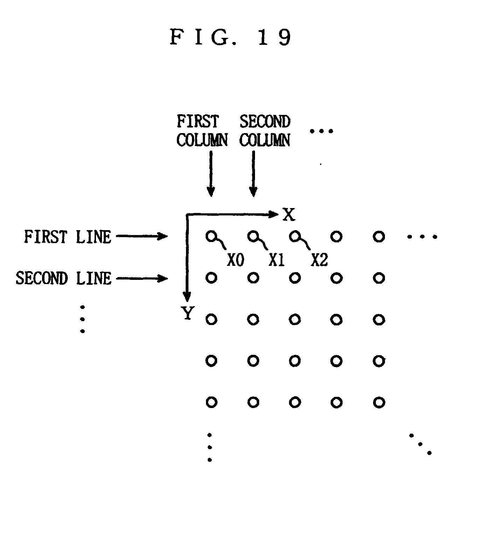

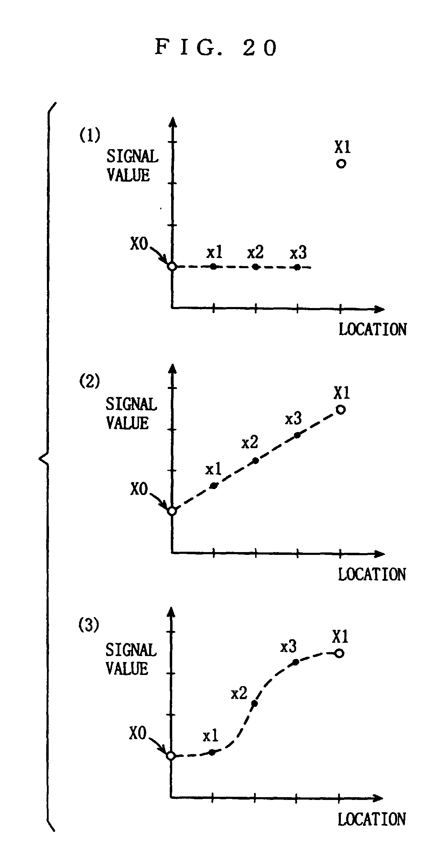

FIG. 19 is a schematic diagram showing original images in a visual form, and FIG. 20 are diagrams each for clearly illustrating the conventional method for generating interpolation pixels. FIG. 20 exemplarily show three methods (1) to (3) for generating three interpolation pixels. Such methods are disclosed in Japanese Patent Laying-Open No. 8-287244 (96-287244).

In FIG. 20, a lateral axis indicates pixel location and a longitudinal axis indicates a pixel's signal value. To be more specific, X0 and X1 are a pair of original pixels laterally (in the X direction) adjacent to each other (location and signal values thereof) and x1 to x3 are interpolation pixels (location and signal values thereof).

In the method (1) shown in FIG. 20, the interpolation pixels x1 to x3 are generated based on the brightness of the original pixel X0. In this manner, images obtained thereby (images obtained by interpolating such generated interpolation pixels; hereinafter, upscaled images) may result in a stairstep effect around edge or perceivably lower resolution.

In the method (2) in FIG. 20, the interpolation pixels x1 to x3 are defined by brightness in consideration of a linear line between the original pixels X0 and X1 (hereinafter, interpolation line). In this manner, the upscaled images may result in blurred contours of objects or characters.

To get around such problems, in the method (3) in FIG. 20, the interpolation pixels x1 to x3 are defined by brightness in consideration of an interpolation curve. The curve is drawn from the original pixel X0 to X1, and the slope in the vicinity of the ends is gradual but otherwise steep. In this manner, the stairstep effect around edge in the upscaled image may not be conspicuous and the contours of the characters may become rather sharp.

Images generally, include, in a single screen, a region high in spatial frequency (region where images show a higher degree of variation) and a region low (region where images show a lower degree of variation). Therefore, the method (3) in FIG. 20 has been popular for generating the interpolation pixels so that the images displayed on the screen are entirely improved in quality.

However, the method (3) in FIG. 20, i.e., the conventional method for generating interpolation pixels by utilizing the interpolation curve has such problem that the more interpolation pixels (i.e., the higher the upscaling rate for the images), the likelier the contours of the characters blur.

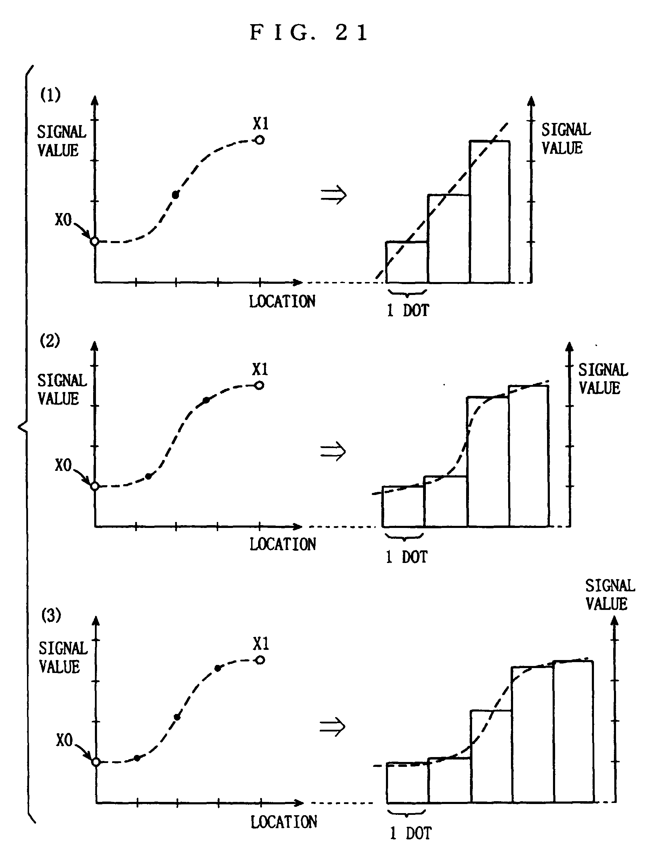

Such problem of blurring the contours caused by the higher upscaling rate is described next below with reference to FIG. 21.

FIG. 21 shows diagrams each clearly explaining the reason why the contours get blurred as the upscaling rate gets higher, i.e., as the number of pixels is increased, in the conventional method for generating interpolation pixels. In FIG. 21, on the left of the arrow, the original pixels X1 and X2, an interpolation curve between these X1 and X2, and an interpolation pixel(s) on the interpolation curve are shown, and on the right, the original pixels X1 and X2 and the interpolation pixel(s) displayed on a display are shown (one block is equivalent to a dot on the display, and the height of the block indicates a signal value (brightness)), respectively.

As is known from (1) to (3) of FIG. 21, on comparison, the larger the number of interpolation pixels, the more gradual the change in images displayed on the display becomes.

This tells that, in the conventional method for generating interpolation pixels, the higher the upscaling rate (i.e., the more interpolation pixels), the likelier the contours of the characters blur.

Note that, the above-described publication discloses another manner of generating interpolation pixels by switching the method (2) of FIG. 20 to/from the method (3) of FIG. 20 depending on the spatial frequency peripheral to a location where the interpolation pixel is to be interpolated. In detail, in a region where the spatial frequency is lower, the interpolation line is utilized to generate interpolation pixels, and in a region where the spatial frequency is higher, the interpolation curve is utilized to generate interpolation pixels. In this manner, compared with a case where only the interpolation curve is utilized, the images displayed on the screen are entirely improved in quality.

However, in the region where the interpolation curve is utilized, the problem of having the contours blurred as the number of interpolation pixels is increased is yet unsolved.

Therefore, an object of the present invention is to provide an apparatus for generating interpolation pixels to be supplied to a matrix-type display capable of upscaling images so that the contours of characters, for example, on the display are prevented from being conspicuously blurred even if an upscaling rate gets higher (i.e., even if the number of interpolation pixels to be interpolated between a pair of original pixels is increased).

DISCLOSURE OF THE INVENTION

The present invention has the following features to attain the object above.

A first aspect of the present invention is directed to an interpolation pixel generation apparatus for generating an interpolation pixel to be supplied to a matrix-type display capable of displaying an upscaled image for interpolation between a pair of original pixels, the apparatus comprising:

interpolation curve production means for producing an interpolation curve having the pair of original pixels at ends, and is sloped gradual in the vicinity of the ends but otherwise steep;
interpolation curve deformation means for deforming the interpolation curve according to an upscaling rate of the image; and
interpolation pixel calculation means for calculating, by using the interpolation curve deformed by the interpolation curve deformation means, an interpolation pixel for interpolation between the pair of original pixels.

As described above, in the first aspect, when the interpolation pixels are generated for interpolation between the pair of original pixels, according to the image upscaling rate, the interpolation curve is preferably so deformed that the slope for the section not in the vicinity of the ends becomes steeper as the upscaling rate is increased. Accordingly, even if the upscaling rate is increased (that is, even if the number of interpolation pixels is increased), the contours of the characters, for example, on the display do not become conspicuous.

According to a second aspect, in the first aspect, the interpolation curve deformation means so deforms the interpolation curve that the slope for a section not in the vicinity of the ends becomes steeper as the image upscaling rate is increased.

A third aspect is directed to an interpolation pixel generation apparatus for generating an interpolation pixel to be supplied to a matrix-type display capable of displaying an upscaled image for interpolation between a pair of original pixels, the apparatus comprising:

an interpolation curve production circuit for producing an interpolation curve having the pair of original pixels at ends, and the interpolation curve has no slope for a section in the vicinity of the ends but has a slope of larger than 0 for a section not in the vicinity of the ends;
a deduction circuit for calculating a difference between the pair of original pixels;
a multiplication circuit for multiplying an output from the interpolation curve production circuit and an output from the deduction circuit; and
an addition circuit for adding one of the pair of original pixels and an output from the multiplication circuit, wherein
the interpolation curve production circuit comprises:

a basic signal production circuit for producing a basic signal as a basis of the interpolation curve by accumulating a reciprocal of an image upscaling rate;

a binary circuit for representing an output from the basic signal production circuit in binary;
a linear conversion circuit for subjecting the output from the basic signal production circuit to linear conversion;
a selector for selecting either one of an output from the binary circuit and an output from the linear conversion circuit; and
a section determination circuit for determining the section in the vicinity of the ends and the section not in the vicinity of the ends, and outputting a control signal indicating the determination to the selector.

As described above, in the third aspect, when the interpolation pixels are generated for interpolation between the pair of original pixels, according to the image upscaling rate, the interpolation curve is preferably so deformed that the slope for the section not in the vicinity of the ends becomes steeper as the upscaling rate is increased. Accordingly, even if the upscaling rate is increased (that is, even if the number of interpolation pixels is increased), the contours of the characters, for example, on the display do not become conspicuous.

According to a fourth aspect, in the third aspect, the interpolation curve production circuit further comprises a COS conversion circuit for converting the output from the linear conversion circuit into a cosine curve, and

the selector selects either one of the output from the binary circuit and an output from the COS conversion circuit.

As described above, in the fourth aspect, image quality is more improved than in the third aspect. In the third aspect, on the other hand, the circuit structure is more simplified than in the fourth aspect.

According to a fifth aspect, in the third or fourth aspect, the section determination circuit narrows in width the section not in the vicinity of the ends as the upscaling rate is increased so that the slope for the section becomes steeper.

A sixth aspect is directed to an interpolation pixel generation method for generating an interpolation pixel to be supplied to a matrix-type display capable of displaying an upscaled image for interpolation between a pair of original pixels, the method comprising the steps of:

producing an interpolation curve having the pair of original pixels at ends, and is sloped gradual in the vicinity of the ends but otherwise steep;
deforming the interpolation curve according to an upscaling rate of the image; and
calculating, by using the interpolation curve deformed by the interpolation curve deformation means, an interpolation pixel for interpolation between the pair of original pixels.

A seventh aspect is directed to a recording medium being stored a program to be executed on a computer device to generate an interpolation pixel to be supplied to a matrix-type display capable of displaying an upscaled image for Interpolation between a pair of original pixels, the program being for realizing an operational environment comprising the steps of:

producing an interpolation curve having the pair of original pixels at ends, and is sloped gradual in the vicinity of the ends but otherwise steep;
deforming the interpolation curve according to an upscaling rate of the image; and
calculating, by using the interpolation curve deformed by the interpolation curve deformation means, an interpolation pixel for interpolation between the pair of original pixels.

An eighth aspect is directed to a program supply method for supplying a program to be executed on a computer device over a network to generate an interpolation pixel to be supplied to a matrix-type display capable of displaying an upscaled image for interpolation between a pair of original pixels, the program being for realizing an operational environment comprising the steps of:

producing an interpolation curve having the pair of original pixels at ends, and is sloped gradual in the vicinity of the ends but otherwise steep;
deforming the interpolation curve according to an upscaling rate of the image; and
calculating, by using the interpolation curve deformed in the interpolation curve deforming step, an interpolation pixel for interpolation between the pair of original pixels.

BRIEF DESCRIPTION OF THE DRAWINGS

FIG. 1 is a block diagram showing the functional structure of an apparatus for generating interpolation pixels according to a first embodiment of the present invention.
FIG. 2 is a block diagram showing the structure of a hardware of a computer device which realizes the apparatus for generating interpolation pixels according to the first embodiment of the present invention.
FIG. 3 is a flowchart showing a method for generating interpolation pixels according to the present invention.
FIG. 4 is a diagram showing an interpolation curve produced in step S102 in FIG. 3.
FIG. 5 shows diagrams each for clearly explaining deformation processing to be subjected to the interpolation curve in step S103 in FIG. 3.
FIG. 6 shows diagrams each for clearly explaining, in the method for generating interpolation pixels according to the present invention, the reason why the contours do not blur even if an upscaling rate is increased, i.e., the number of interpolation pixels to be interpolated between a pair of original pixels is increased.
FIG. 7 is a diagram showing the structure of a circuit in an apparatus for generating interpolation pixels according to a second embodiment of the present invention.
FIG. 8 is a diagram showing the internal structure of an interpolation curve production circuit 4 in FIG. 7.
FIG. 9 is a diagram showing an exemplary structure of a basic signal generation circuit 5 in FIG. 8.
FIG. 10 is a diagram showing the relationship between an output signal *a* from the basic signal production circuit 5 in FIG. 8 and original pixels X0 and X1.
FIG. 11 is a diagram showing an output signal *k* (i.e., interpolation curve) from the interpolation curve production circuit 4 in FIG. 7.

FIG. 12 is a diagram showing how the apparatus for generating interpolation pixels (FIG. 7) according to the second embodiment of the present invention responds when received an impulse.

FIG. 13 is a diagram showing a frequency characteristic H(f) obtained by subjecting an impulse response h(t) in FIG. 12 to Fourier transform.

FIG. 14 is a diagram showing the internal structure of the interpolation curve production circuit 4 in FIG. 7 (third embodiment).

FIG. 15 is a diagram showing the output signal $k$ (i.e., interpolation curve) from the interpolation curve production circuit 4 in FIG. 7 (third embodiment).

FIG. 16 is a diagram showing how an apparatus for generating interpolation pixels (FIG. 7) according to the third embodiment of the present invention responds when received an impulse.

FIG. 17 is a diagram showing a frequency characteristic J(f) obtained by subjecting an impulse response j(t) in FIG. 16 to Fourier transform.

FIG. 18 is a graph showing frequency characteristics in a case where a setting signal P is set to 0.4 (dotted line in FIG. 13) in the second embodiment and a case where the setting signal P is set to 0.6 (dotted line in FIG. 17) in the third embodiment.

FIG. 19 is a schematic diagram showing original images in a visual form.

FIG. 20 shows diagrams each for clearly explaining a conventional method for generating interpolation pixels.

FIG. 21 shows diagrams each for clearly explaining the reason why the contours of the characters get blurred as the upscaling rate gets higher, i.e., the number of interpolation pixels is increased in the conventional method for generating interpolation pixels.

BEST MODE FOR CARRYING OUT THE INVENTION

Hereinafter, embodiments of the present invention are described by referring to the accompanying drawings.

(First Embodiment)

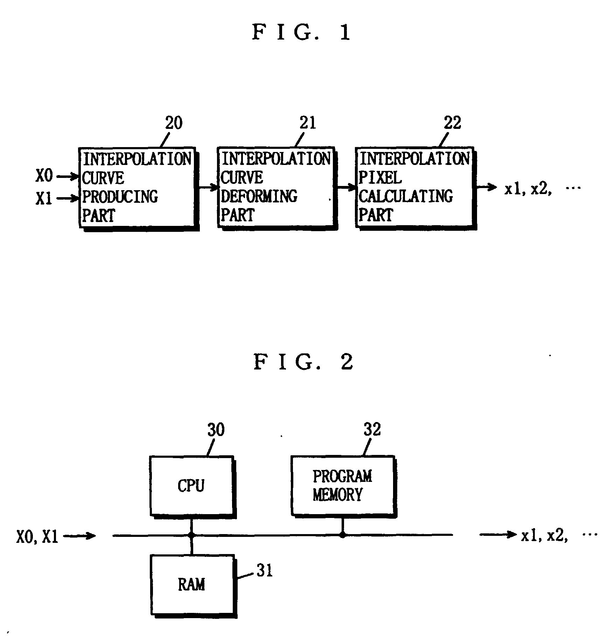

FIG. 1 is a block diagram showing the functional structure of an apparatus for generating interpolation pixels according to a first embodiment of the present invention. In FIG. 1, the apparatus for generating interpolation pixels of the first embodiment (hereinafter, interpolation pixel generation apparatus) is provided with an interpolation curve producing part 20, an interpolation curve deforming part 21, and an interpolation pixel calculating part 22.

The interpolation curve producing part 20 produces an interpolation curve on the basis of original pixels X0 and X1 (signal value thereof). Herein, the interpolation curve produced by the interpolation curve producing part 20 is the one drawn from the original pixel X0 to X1, and the slope in the vicinity of the ends is gradual but otherwise steep. Such interpolation curve may be a conventionally-known interpolation curve as shown In FIG. 21.

The Interpolation curve deforming part 21 deforms the interpolation curve produced by the interpolation curve producing part 20 according to an image upscaling rate (later described). Preferably, the interpolation curve is so deformed that the slope for the section not in the vicinity of the ends gets steeper as the upscaling rate for images gets higher.

By using the interpolation curve deformed by the interpolation curve deforming part 21, the interpolation pixel calculating part 22 calculates interpolation pixels (signal values thereof) such as x1 and x2.

FIG. 2 is a block diagram showing the structure of a hardware of a computer device which implements the interpolation pixel generation apparatus according to the first embodiment of the present invention. In FIG. 2, the computer device is provided with a CPU 30, RAM 31, and program memory 32. The program memory 32 stores predetermined program data, and according thereto, the CPU 30 operates. Accordingly, the interpolation curve producing part 20, the interpolation curve deforming part 21, and the interpolation pixel calculating part 22 in FIG. 1 can respectively function. The RAM 31 exemplarily stores intermediate data generated in the operation of the CPU 30.

Herein, there are three methods for storing the program data into the program memory 32. In the first method, program data is read from a recording medium on which the program data is recorded, and is stored into the program memory 32. In the second method, program data transmitted over a network is received, and is stored into the program memory 32. In the third method, prior to shipping the computer device, program data is stored into the program memory 32.

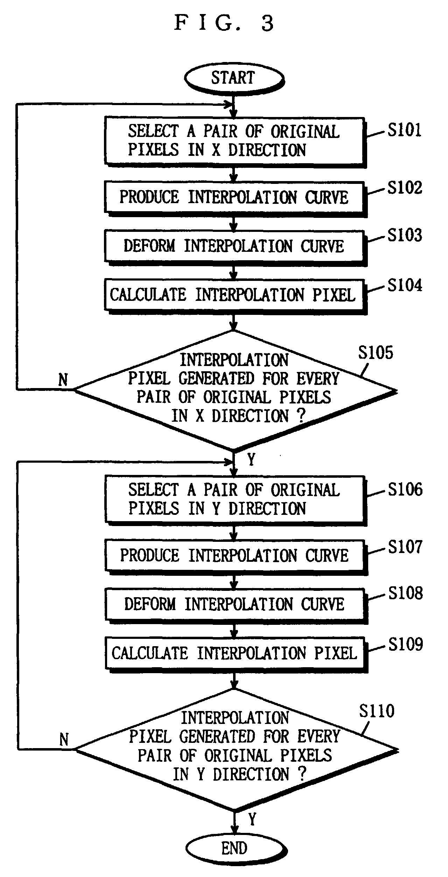

FIG. 3 is a flowchart showing a method for generating interpolation pixels of the present invention. By referring to FIG. 3, the operation of the interpolation pixel generation apparatus is described next below.

In FIG. 3, the interpolation curve producing part 20 first laterally (in X direction) selects a pair of original pixels for interpolation (step S101). It is herein assumed that a pair of original pixels X0 and X1 laterally adjacent to each other are selected (as to original pixels X0 and X1, see FIG. 19).

Next, the interpolation pixel producing part 20 produces an interpolation curve on the basis of the original pixels X0 and X1 (signal values thereof) (step S102).

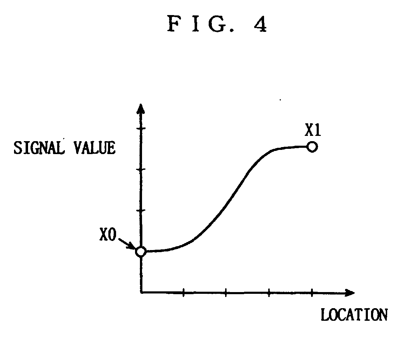

FIG. 4 is a diagram showing the interpolation curve produced in step S102. The interpolation curve shown in FIG. 4 is the same as the one shown in FIG.

21. It means, the interpolation curve is a curve connecting the pair of the original pixels X0 and X1 (selected in step S101), and the slope in the vicinity of the ends is gradual but otherwise steep. The interpolation pixels generated by utilizing such interpolation curve may improve the entire image in quality.

The interpolation curve producing part 20 is provided with a conventionally-known algorithm for producing such interpolation curve connecting an arbitrary pair of original pixels and being sloped as such. According to the algorithm, processing is carried out to produce the interpolation curve.

Referring back to FIG. 3, the interpolation curve deforming part 21 deforms (in the X direction) the interpolation curve produced by the interpolation curve producing part 20 in step S102 according to the number of interpolation pixels to be interpolated between the original pixels X1 and X2 (step S103).

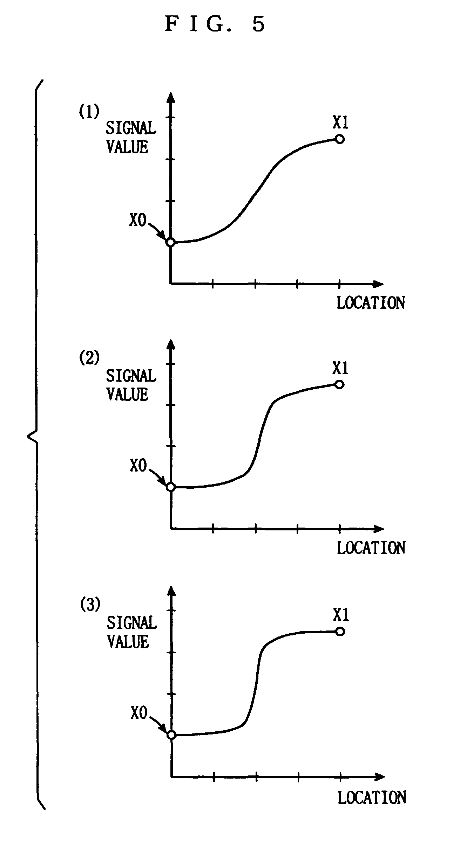

FIG. 5 shows diagrams each for clearly explaining deformation processing carried out for the interpolation curve in step S103. (1) of FIG. 5 shows a (deformed) interpolation curve obtained by deforming the interpolation curve in FIG. 4 in a case where one interpolation pixel is interpolated between the original pixels X1 and X2. (2) of FIG. 5 shows a (deformed) interpolation curve obtained by deforming the interpolation curve in FIG. 4 in a case where two Interpolation pixels are interpolated between the original pixels X1 and X2. (3) of FIG. 5 shows a (deformed) Interpolation curve obtained by deforming the interpolation curve in FIG. 4 in a case where three interpolation pixels are interpolated between the original pixels X1 and X2.

As is known from (1) to (3) in FIG. 5, on comparison, as the number of interpolation pixels to be interpolated between the original pixels X1 and X2 is increased (i.e., as the upscaling rate gets higher), the interpolation curve deforming part 21 deforms the interpolation curve (in the X direction) in such a manner that the slope in the center thereof gets narrower in width (slope gets steeper). The interpolation curve deforming part 21 is provided with a conventionally-known algorithm for deforming such interpolation curve, and according thereto, processing is carried out to deform the interpolation curve.

Referring back to FIG. 3, the interpolation curve calculating part 22 calculates the interpolation pixel(s) by using the interpolation curve deformed in step S103 (step S104).

In a case where one interpolation pixel is interpolated between the original pixels X1 and X2, a point (signal value thereof) on the deformed interpolation curve in (1) of FIG. 5 is regarded as the interpolation pixel. In a case where two interpolation pixels are interpolated between the original pixels X1 and X2, two points (signal values thereof) on the deformed interpolation curve in (2) of FIG. 5 are regarded as the interpolation pixels. In a case where three Interpolation pixels are interpolated between the original pixels X1 and X2, three points (signal values thereof) on the deformed interpolation curve (3) of FIG. 5 are regarded as the interpolation pixels. In a case where four or more interpolation pixels are interpolated, interpolation pixels (signal values thereof) are calculated in a similar manner.

In this manner, the interpolation pixels to be interpolated between the original pixels X1 and X2 are generated. Thereafter, laterally, it is judged whether or not interpolation pixel(s) have been generated for every pair of original pixels in a single screen for interpolation therebetween (step S105). If judged as not yet, the procedure returns to step S101 to repeat the same processing again.

If judged Yes in step S105, the interpolation curve producing part 20 longitudinally (Y direction) selects a pair of original pixels for interpolation (step S106). Herein, the processing from then and onward is the same as the processing relevant to the lateral processing, and thus is briefly described.

Next, the interpolation curve producing part 20 produces an interpolation curve (step S107). Then, the interpolation curve deforming part 21 deforms the interpolation curve produced by the interpolation curve producing part 20 in step S107 according to the number of interpolation pixels to be interpolated between the original pixels (step S108). Then, the interpolation pixel calculating part 22 calculates the interpolation pixels by utilizing the interpolation curve deformed in step S108 (step S109). Thereafter, in the longitudinal direction, it is judged whether or not interpolation pixels have been generated for every pair of the original pixels in a single screen for interpolation therebetween (step S110). If judged as not yet, the procedure returns to step S106 to repeat the same processing.

In this manner, such interpolation pixel generation processing is sequentially carried out on a pixel line basis first in the horizontal direction (X direction) for the original image (see FIG. 19), and then is sequentially carried out also on a pixel line basis in the longitudinal direction (Y direction). Then, after every interpolation pixel is completely generated for the screen, and if judged Yes in step S110, the processing is terminated.

Such generated interpolation pixels are interpolated between a pair of original pixels so as to upscale an image. Accordingly, even if the number (herein, a value obtained by adding 1 to the number is defined as upscaling rate) of interpolation pixels interpolated therebetween is increased, the contours may not blur as have conventionally been. The reason therefor is described next below.

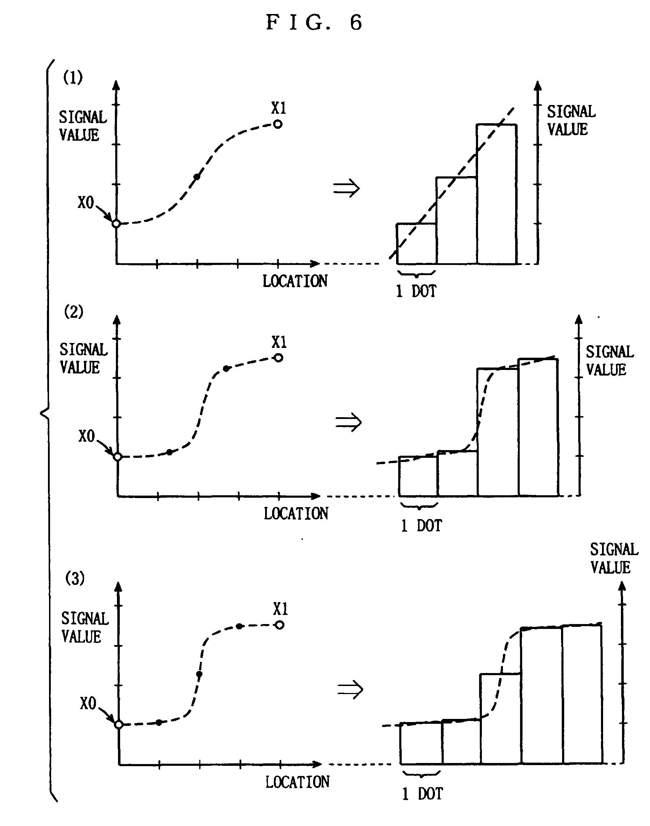

FIG. 6 shows diagrams each for clearly explaining, in the method for generating interpolation pixels according to the present invention, the reason why the contours do not blur even if the upscaling rate is increased, i.e., the number of interpolation pixels to be interpolated between a pair of original pixels is increased. In FIG. 6, on the left of the arrow, the original pixels X1 and X2, an interpolation curve between these X1 and X2, and the Interpolation pixel(s) (1 to 3) on the interpolation curve are shown, and on the right, the original pixels X1 and X2 and the interpolation pixel(s) displayed on a display are shown (one block is equivalent to a dot on the display, and the height of the block indicates a signal value).

As is known from (1) to (3) of FIG. 6, on comparison, the interpolation curve is so deformed that the slope in the center thereof gets steeper (the width of slope gets narrower) as the number of interpolation pixels is increased. Therefore, unlike the conventional case (see FIG. 21), even if the number of interpolation pixels is increased one by one, the image on the display will not show gradual change (that is, the image is not susceptible to the upscaling rate but kept approximately constant).

As is known from this, in the method for generating interpolation pixels of the present invention, the contours of the characters, and the like, do not become conspicuous even if the number of interpolation pixels is increased.

As such, according to this embodiment, when the interpolation pixel(s) to be interpolated between a pair of original pixels are generated, as the upscaling rate is increased, the interpolation curve is preferably so deformed that the slope in the center section becomes steeper according to the image upscaling rate. Accordingly, even if the upscaling rate is increased (that is, even if the number of interpolation pixels is increased), the contours of the characters, for example, on the display do not become conspicuous.

Note that, in this embodiment, the interpolation pixel generation processing is sequentially carried out on a pixel line basis first in the horizontal direction (X direction), and then is sequentially carried out also on a pixel line basis in the longitudinal direction (Y direction) (if this is the case, frame memory is required to store pixels for one frame). As an alternative manner, interpolation may be done alternately between horizontal direction and vertical direction.

For example, interpolation is done first in the horizontal direction for the first and second pixel lines, and then interpolation is done in the vertical direction for the first and second pixel lines. Thereafter, interpolation is done in the horizontal direction for the third pixel line, and then interpolation is done in the vertical direction for the second and third pixel lines. Hereinafter, in the same manner, interpolation is alternately done in the horizontal direction and the vertical direction. With such interpolation, there is no more need for the frame memory but line memory for storing pixels for a few lines.

(Second Embodiment)

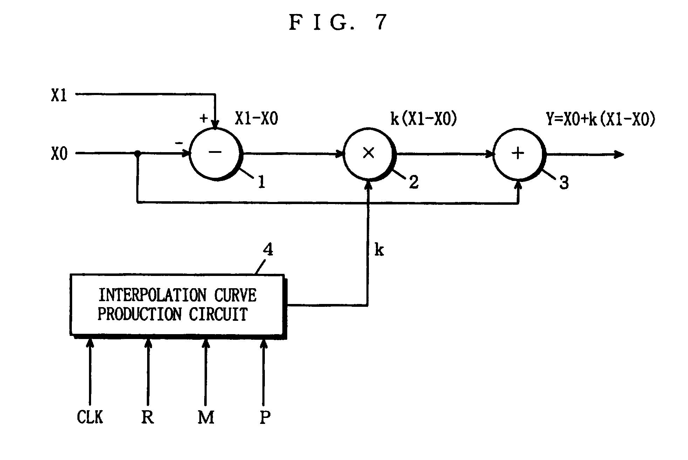

FIG. 7 is a diagram showing the structure of a circuit in an apparatus for generating interpolation pixels according to a second embodiment of the present invention. The apparatus for generating interpolation pixels (hereinafter, interpolation pixel generation apparatus) produces an interpolation curve for interpolation between two pixels of the original, image on the basis of the upscaling rate (see the first embodiment for definition thereof).

The interpolation curve is structured by two linear parts where having no slope and a linear part where having a slope. With such interpolation curve, if the linear part having a slope is proportionally changed according to the upscaling rate, the resultant interpolation curve is appropriate for the upscaling rate. The interpolation pixel generation apparatus utilizes such produced interpolation curve to generate interpolation pixels. Accordingly, on a matrix-type display having the interpolation pixel generation apparatus equipped, an image upscaled by an arbitrary upscaling rate can be sharp and free from distortion.

In FIG. 7, incoming signals (original pixels) X0 and X1 correspond to two pixels laterally or vertically adjacent to each other on the original image (see FIG. 19; laterally adjacent therein). When the image is upscaled in the horizontal direction (lateral), the pixel located on the right hand side to the pixel corresponding to the signal X0 is regarded as the one corresponding to the signal X1. When the image is upscaled In the vertical direction (longitudinal), on the other hand, the pixel located beneath the pixel corresponding to the signal X0 is regarded as the one corresponding to the signal X1.

A deduction circuit 1 is a circuit for calculating a difference between two pixels, and outputs a difference (X1 - X0) between the incoming signals X0 and X1.

A multiplication circuit 2 is a circuit for multiplying the difference calculated in the deduction circuit 1 for the two pixels by an output signal $k$ from an interpolation curve production circuit 4, which will be later described.

An addition circuit 3 is a circuit for adding the incoming signal X0 and an output signal $\{k(X1 - X0)\}$ from the multiplication circuit 2 so as to obtain interpolation pixel(s) (signal value(s) thereof) between those adjacent two pixels (signal values X0 and X1).

The interpolation curve production circuit 4 is a circuit for producing an interpolation curve passing through those two adjacent pixels (signal values X0 and X1). The output signal $k$ therefrom (in this embodiment, this $k$ is referred to as interpolation curve) takes a value not less than 0 but not more than 1. The interpolation curve $k$ is determined by setting signals $M$ and $P$ provided from outside. These setting signal $M$ and $P$ are both related to the image upscaling rate.

Such structured interpolation pixel generation apparatus outputs a signal $Y$ having a value of $\{Y = X0 + k \times (X1 - X0)\}$. This value is obtained by dividing the pixel X0 and adjacent pixel X1 of the original image by a ratio of $k : (1 - k)$.

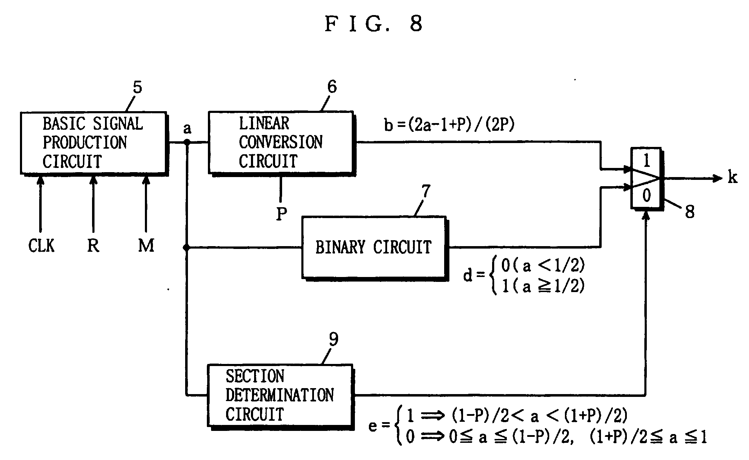

Next, the interpolation curve production circuit 4 is described in detail by referring to FIGS. 8 to 11.

FIG. 8 is a diagram showing the internal structure of the interpolation curve production circuit 4 shown in FIG. 7. In FIG. 8, a basic signal production circuit 5 is a circuit for producing a signal (basic signal) *a* which is a basis of an interpolation curve between two original pixels.

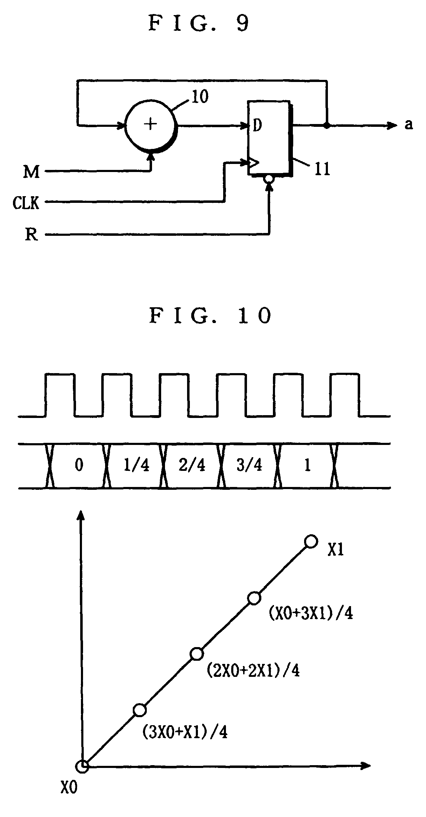

FIG. 9 is a diagram showing an exemplary structure of the basic signal production circuit 5 in FIG. 8. In FIG. 9, through an addition circuit 10 and a flip-flop 11, the setting signal *M* provided from outside is accumulated for every signal CLK.

Herein, the setting signal *M* is set to the reciprocal of the image upscaling rate. For example, *M* is set to 1/2 for the upscaling rate of 2, and 1/3 for the upscaling rate of 3. The upscaling rate is 1 or more (does not have to be an integer). Accordingly, the setting signal *M* takes a value in the range of 0 to 1. The signal CLK is a clock signal for transferring the upscaled image to the display side when the image is laterally upscaled, and is a horizontal synchronizing signal for displaying the upscaled image on the display when the image is longitudinally upscaled.

A signal *R* is for resetting the value obtained by accumulating the setting signal *M*. When the image is laterally upscaled, the reset is done for every horizontal period of the upscaled image, and when the pixel is longitudinally upscaled, the reset is done for every vertical period (one frame period) of the image.

FIG. 10 is a diagram showing the relationship between the output signal *a* from the basic signal production circuit 5 in FIG. 8 and the pixels X0 and X1 of the original image. FIG. 10 shows a case where the upscaling rate is 4 (the number of interpolation pixels interpolated between the original pixels X1 and X2 is 3).

In FIG. 10, with the upscaling rate of 4, the setting signal *M* is *M* = 1/4. Therefore, the output signal *a* synchronizes with the signal CLK and varies in value as *a* = 0, 1/4, 2/4, 3/4, and 1.

Herein, assuming that the signal *a* is the output signal *k* from the interpolation curve production circuit 4, the output signal *Y* from the interpolation pixel generation apparatus (see FIG. 1) synchronizes with the signal CLK, as shown in FIG. 4, and varies in value as *Y*=X0, (3X0+X1)/4, (2X0+2X1)/4, (X0+3X1)/4, and X1.

It tells that the output signal *a* from the basic signal production circuit 5 is the interpolation curve (i.e., interpolation line) linearly connecting two adjacent original pixels.

Referring back to FIG. 8, a linear conversion circuit 6 is a circuit for subjecting the signal *a* produced by the basic signal production circuit 5 to linear conversion, and as shown in the drawing, the equation for an output signal *b* with respect to the signal *a* is $b = (2a - 1 + P)/(2P)$. Herein, the setting signal *P* needs to be changed according to the upscaling rate, and is later described in detail. For example, when *P* = 1, the signal *b* is equal to the signal *a*.

A binary circuit 7 is a circuit for representing the output signal *a* from the basic signal production circuit 5, in binary, by 0 or 1. As is known from the equation in the drawing, an output signal *d* with respect to the signal *a* is 0 if the signal *a* is smaller than (1/2), and is 1 if the signal *a* is (1/2) or larger.

A selector 8 selects either one of the output signal *b* from the linear conversion circuit 6 or the output signal *d* from the binary circuit 7, and then outputs the selected signal as the signal *k*. For the selection, the selector 8 uses a control signal *e*, which is provided by a section determination circuit 9.

The section determination circuit 9 is a circuit for determining, on a section basis, as the interpolation curve between two original pixels, which to select between the output from the linear conversion circuit 6 and the linear line in binary. The signal *e* is utilized by the selector 8 as a control signal for selection. That is, as is known from the equation shown in FIG. 8, for the section where the signal *a* takes a value between {(1-*P*)/2} and {(1 + *P*)/2)}, the signal *e* is 1. If this is the case, the selector 8 selects the output signal *b* from the linear conversion circuit 6 for output as the signal *k*. For the section where the signal *a* takes a value which is not in the above-described range, the signal *e* becomes 0. Thus, the selector 8 selects the output signal *d* from the binary circuit 7 for output as the signal *k*.

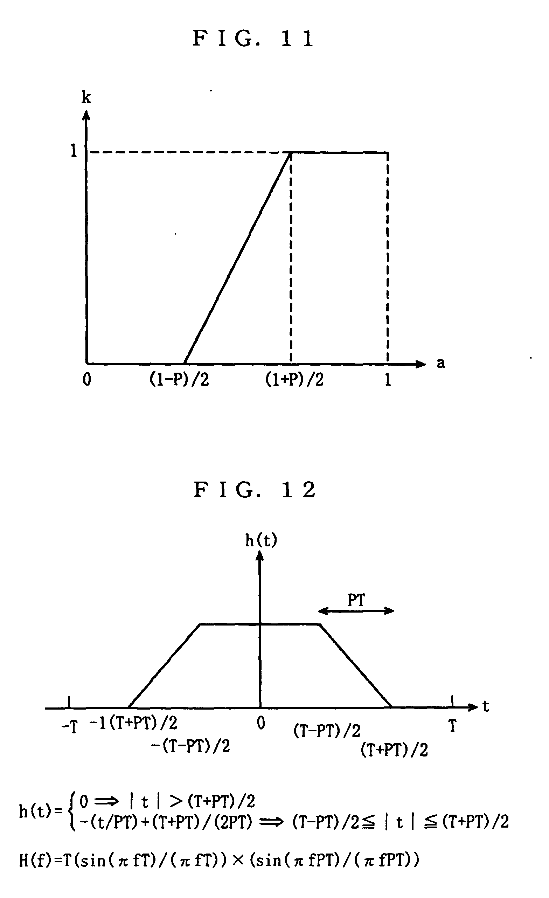

Next, the signal *k* outputted from the interpolation curve production circuit 4 is described by referring to FIG. 11.

FIG. 11 is a diagram showing the output signal *k* (i.e., interpolation curve) from the interpolation curve production circuit 4 in FIG. 7. In FIG. 11, a lateral axis indicates the output signal *a* from the basic signal production circuit 5. Therein, for the section where the signal *a* is in the range from 0 to {(1-*P*)/2}, the signal *k* is 0, for the section between {(1-*P*)/2} and {(1 + *P*)/2}, the signal k takes a value along the line slanting from lower left to upper right, and for the section between (1 + *P*)/2 to 1, the signal *k* is 1.

Accordingly, interpolation pixels outputted from the interpolation pixel generation apparatus (see FIG. 7) for interpolation between the original pixels X0 and X1 to upscale an original image will be along the interpolation curve (broken line in this example) shown in FIG. 11 (i.e., signal values thereon).

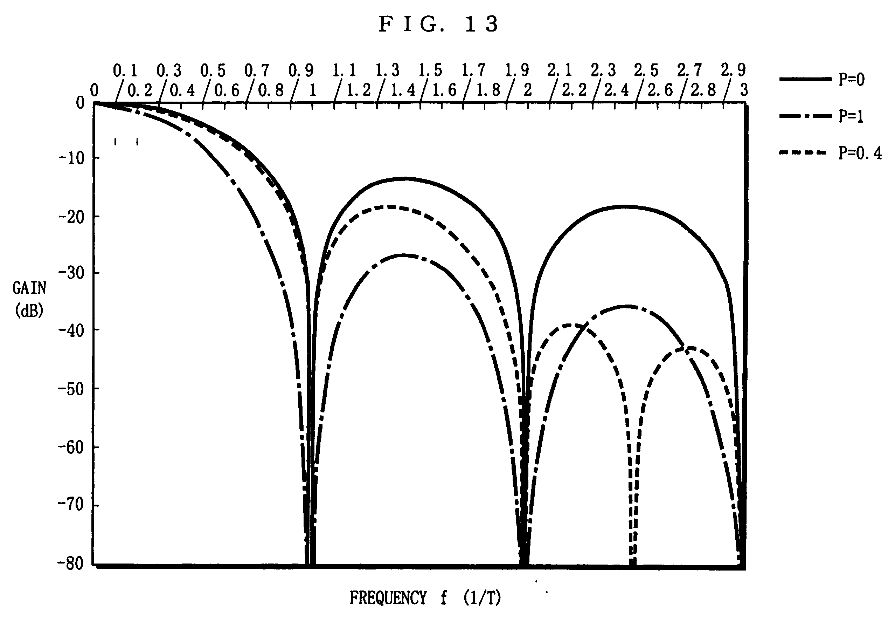

Next, by referring to FIGS. 12 and 13, it is described how the setting signal *P* is determined according to the upscaling rate.

FIG. 12 is a diagram showing how the interpolation pixel generation apparatus (see FIG. 7) responds when received an impulse. A reference character *T* in the drawing indicates a sampling period of the original image. The original image is presumably impulse-type of 1 when t=0, otherwise 0. Since the interpolation pixel generation apparatus is for interpolating between the original pixels X0 and X1 with the interpolation pixels along the interpolation curve shown in FIG. 11, an impulse response h(t) is such waveform as shown in FIG. 12 (trapezoidal wave).

In FIG. 12, with respect to the impulse response h(t) being the trapezoidal wave, the proportion of the linearly parts having a slope (both sides of the trapezoid) is determined by the setting signal $P$. In detail, when $P = 0$, the interpolation curve in FIG. 11 shows no slope and thus the impulse response h(t) becomes rectangular wave. When $P=1$, on the other hand, the interpolation curve shows no flattened part (i.e., part having no slope) and thus h(t) becomes triangular wave.

Now, the impulse response h(t) is subjected to Fourier transform so as to evaluate image quality of the upscaled image.

Generally, by subjecting an impulse response in a certain system to Fourier transform, a frequency characteristic thereof can be obtained. Accordingly, by subjecting the impulse response h(t) in FIG. 12 to Fourier transform, such frequency characteristic H(f) as shown therein can be obtained. Herein, a character $f$ denotes frequency and is in a unit of reciprocal of the sampling period $T$ of the original image ($1/T$). A character $\pi$ denotes pi (this is always applicable in the below).

FIG. 13 is a graph showing the above-described H(f), that is, the frequency characteristic H(f) obtained by subjecting the impulse response h(t) in FIG. 12 to Fourier transform.

FIG. 13 shows the frequency characteristic H(f) for three cases where the setting signal $P$ is 0 (solid line), where 0.4 (dotted line), and where 1 (one-dot line). The longitudinal axis therein indicates a gain (unit thereof is decibel (dB)), and the lateral axis indicates the frequency (unit thereof is the reciprocal ($1/T$) of the sampling period of the original image).

As shown by solid line in FIG. 13, the frequency characteristic H(f) when P = 0 gradually attenuates in level as the frequency $f$ is increased. The frequency characteristic H(f) when $P = 1$ attenuates in level, as shown by the one-dot line, more swiftly (compared with the case where $P = 0$) as the frequency $f$ is increased.

Herein, it is assumed that the original image is upscaled by three times (three interpolation pixels are interpolated between two adjacent original pixels). By regarding the sampling period $T$ of the original image as a unit, upscaling the original image with the upscaling rate of 3 is the same as resampling the original image with a period which is 1/3 of the sampling period $T$ of the original image (sampling point is on the interpolation curve in FIG. 11).

According to Nyquist's sampling theorem, with the sampling frequency of ($3/T$), the upscaled image is limited to a half of the sampling frequency ($3/T$), i.e., to ($1.5/T$). Any frequency component higher than ($1.5/T$) aliases to between 0 and ($1.5/T$). Since the upscaled image becomes distorted if this aliasing occurs to a greater degree, any frequency higher than ($1.5/T$) is preferably attenuated to a possible extent.

Herein, if the gain of frequency components lower than ($1.5/$) is neglected to fully attenuate the frequency components higher than ($1.5/T$), the upscaled image cannot be fully enhanced by contours, and resultantly becomes poor in clarity.

With consideration therefor, as will be known from FIG. 13, in the case of $P = 0$ (solid line), the upscaled image gets blurred since attenuation is too gradual in the frequency domain where the frequency is ($1.5/T$) or higher. In the case of $P = 1$ (one-dot line), the upscaled image is poor in clarity since the gain in the frequency domain where the frequency is lower than ($1.5/T$) is lower.

By taking between those, the gain in the vicinity of ($1.5/T$) is closer to $P = 0$, and in the higher frequency domain where attenuation can be done to a greater extent compared with the case where $P = 0$, such frequency characteristic can be obtained.

In detail, by using the equation of the frequency characteristic H(f) shown in FIG. 12 for a part of $\sin(\pi fPT)$, the gain is sharply attenuated at the frequency of ($2.5/T$), and thus attenuation in the higher frequency domain is experimentally increased in level compared to the case where P = 0.

The above-mentioned $\sin(\pi fPT)$ will be $\sin(2.5\pi P)$ if ($2.5/T$) is assigned to $f$ therein. In order to make it 0, only $\pi$ may be bracketed. Accordingly, $P$ is determined to be 0.4.

As already shown in FIG. 13, the frequency characteristic when P = 0.4 (dotted line) is considerably improved in the frequency domain where the frequency is ($1.5/T$) or lower compared to a case where P = 1 (one-dot line). Further, attenuation in the higher frequency domain is also rather improved compared to a case where P = 0 (solid line).

Therefore, for a case where the original image is upscaled by three times, with the setting signal $P$ set to 0.4, the interpolation pixel generation apparatus can generate such interpolation pixels that allowing the resultant upscaled image to be clear and less distorted.

In the case that the upscaling rate is relatively lower as 1.5, the upscaled image is limited to a half of the sampling frequency ($1.5/T$), i.e., ($0.75/T$). In such case, the upscaled image may be distorted if $P$ is set to between 0 and 1 as 0.4. This is because attenuation in the region where the frequency is higher than ($1/T$) is not sufficiently done. Therefore, for a case where the upscaling rate is relatively lower, $P = 1$ is preferable.

Conclusively, by setting $P = 1$ when the upscaling rate is lower (closer to 1) and setting $P$ to a value closer to 0 as the upscaling rate is increased, it becomes possible to obtain the clear and no-distorted upscaled image regardless of the upscaling rate.

As described above, according to this embodiment, when the interpolation pixel(s) to be interpolated between a pair of original pixels are generated, the interpolation curve is preferably so deformed, according to the image upscaling rate, that the slope for the section not in the vicinity of the ends gets steeper as the image upscaling rate gets higher. In this manner, the contours of characters, for example, on the display may not so conspicuously blurred even if the upscaling rate gets higher (i.e., even if the number of interpolation pixels is increased).

As to a third embodiment described next below is for clarifying the upscaled image and preventing the image from being distorted to a greater extent by additionally providing a circuit in the interpolation curve production circuit 4 shown in FIG. 7 in the second embodiment.

(Third Embodiment)

An interpolation pixel generation apparatus according to the third embodiment of the present invention is structurally the same as the second embodiment, and thus FIG. 7 is used for description again.

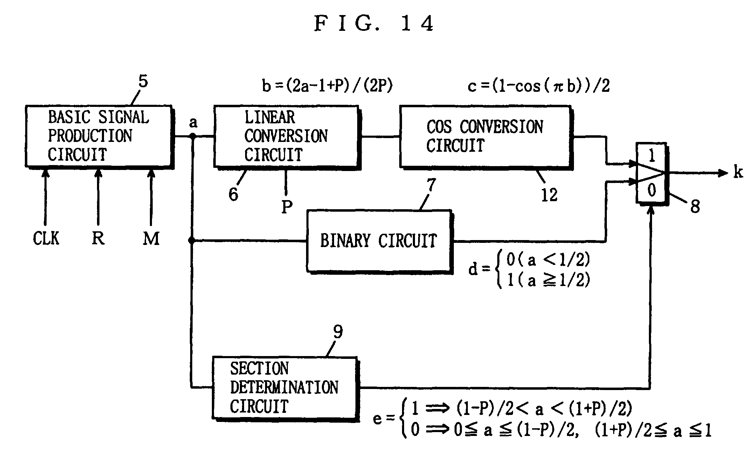

FIG. 14 is a diagram showing the internal structure of the interpolation curve production circuit 4 in FIG. 7. The interpolation curve production circuit 4 in FIG. 14 is different from the interpolation curve production circuit 4 in FIG. 8 (see the first embodiment) in a respect that a COS conversion circuit 12 is additionally provided. In FIG. 14, constituents except for the COS conversion circuit 12 operate similar to those in FIG. 8, which are described in the first embodiment.

In FIG. 14, the COS conversion circuit 12 is a circuit for further subjecting the output signal *b* from the linear conversion circuit 6 to COS conversion. An equation for such conversion is [$c = \{1 - \cos(\pi b)\}/2$] as shown in the drawing. Note herein that the COS conversion circuit 12 is normally structured by ROM (read only memory).

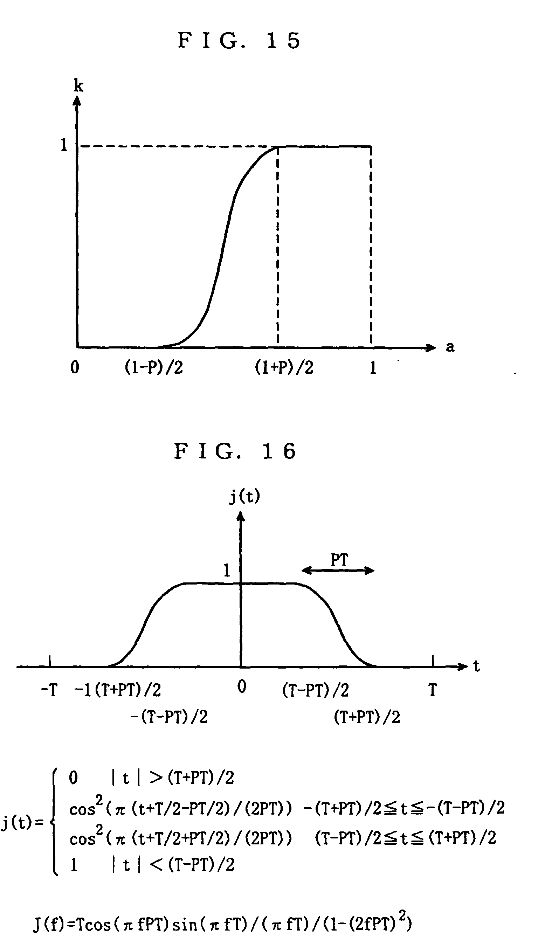

Next, a signal *k* provided by the interpolation curve production circuit 4 in FIG. 14 is described with reference to FIG. 15.

FIG. 15 is a diagram showing the output signal *k* (i.e., interpolation curve) provided by the interpolation curve production circuit 4. In FIG. 15, the lateral axis therein indicates the output signal *a* from the basic signal production circuit 5, and for the section where the signal *a* takes a value from 0 to $\{(1-P)/2\}$, the signal *k* is 0. For the section between $\{(1 - P)/2\}$ and $\{(1 + P)/2\}$, the signal *k* takes values along a cos curve, and for the section from $\{(1 + P)/2\}$ to 1, the signal *k* is 1.

Accordingly, when an original image is upscaled, interpolation pixels (i.e., signal values on the interpolation curve) outputted from the interpolation pixel generation apparatus (see FIG. 7) for interpolation between the original pixels X0 and X1 will be along the interpolation curve (curve is gentle in this example) shown in FIG. 15.

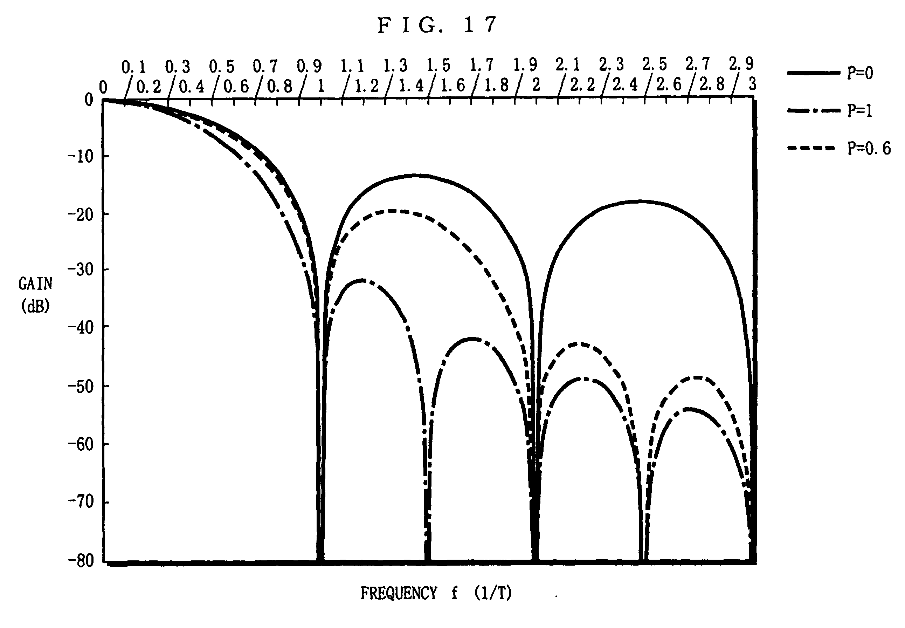

Next, by referring to FIGS. 16 and 17, it is described how the setting signal *P* is determined according to the upscaling rate.

FIG. 16 is a diagram showing how the interpolation pixel generation apparatus responds when received an impulse. The impulse to be provided is the same as the one in the first embodiment. Since the interpolation pixel generation apparatus is for interpolating between two adjacent original pixels with the interpolation pixels along such interpolation curve as shown in FIG. 15, an impulse response is such waveform j(t) as shown in FIG. 16.

In FIG. 16, with respect to the impulse response j(t), the proportion of the cos curve is determined by the setting signal *P*. In detail, when *P* = 0, the interpolation curve in FIG. 15 shows no cos curve and thus the impulse response j(t) becomes rectangular wave. When *P* = 1, on the other hand, the interpolation curve shows no flattened part and thus j(t) entirely becomes the cos curve.

Now, the above-mentioned impulse response j(t) is subjected to Fourier transform so as to evaluate image quality of the upscaled image.

By subjecting the impulse response j(t) in FIG. 16 to Fourier transform, such frequency characteristic J(f) as shown therein can be obtained.

FIG. 17 is a graph showing the frequency characteristic J(f), that is, the frequency characteristic J(f) obtained by subjecting the impulse response j(t) in FIG. 16 to Fourier transform. FIG. 17 shows the frequency characteristic H(f) for three cases where the setting signal *P* is 0 (solid line), where 0.6 (dotted line), and where 1 (one-dot line).

As shown by solid line in FIG. 17, the frequency characteristic H(f) when P = 0 gradually attenuates in level as the frequency *f* is increased. The frequency characteristic H(f) when *P* = 1 attenuates in level, as shown by the one-dot line, more swiftly (compared with the case where *P* = 0) as the frequency *f* is increased.

Herein, similarly to the second embodiment, it is assumed that the original image is upscaled by three times.

Upscaling the original image with the upscaling rate of 3 is the same as resampling the original image with a sampling frequency of $(3/T)$. In this case, the upscaled image is limited to $(1.5/T)$ or lower, and any frequency component equal to or higher than $(1.5/T)$ aliases to between 0 and $(1.5/T)$. As already described in the second embodiment, the upscaled image becomes distorted if this aliasing occurs to a greater degree. Therefore, any frequency higher than $(1.5/T)$ is preferably attenuated to a possible extent.

Herein, if the gain of frequency components lower than $(1.5/)$ is neglected to fully attenuate the frequency components higher than $(1.5/T)$, the upscaled image cannot be fully enhanced by contours, and resultantly becomes poor in clarity.

With consideration therefor, as will be known from FIG. 17, in the case of $P = 0$ (solid line), the upscaled image gets distorted since attenuation is too gradual in the frequency domain where the frequency is $(1.5/T)$ or higher. In the case of $P = 1$ (one-dot line), the upscaled image is poor in clarity since the gain is abruptly reduced at $(1.5/T)$ and attenuation therearound is done to a greater extent.

By taking between those, the gain in the vicinity of $(1.5/T)$ is closer to $P = 0$, and in the higher frequency domain where attenuation can be done to a greater extent compared with the case where $P = 0$, such frequency characteristic can be obtained.

In detail, by using the equation of the frequency characteristic J(f) shown in FIG. 16 for a part of $\cos(\pi fPT)$, the gain is sharply attenuated at the frequency of $(2.5/T)$, and thus attenuation in the higher frequency domain is experimentally increased in level compared to the case where P=0 (solid line).

The above-mentioned $\cos(\pi fPT)$ will be $\cos(2.5\pi P)$ if $(2.5/T)$ is assigned to $f$ therein. In order to make it 0, $3\pi/2$ may be bracketed. Accordingly, $P$ is determined to be 0.6.

As already shown in FIG. 17, the frequency characteristic when $P = 0.6$ (dotted line) is considerably improved in the vicinity of $(1.5/T)$ compared to a case where $P = 1$ (one-dot line). Further, attenuation in the higher frequency domain is also rather improved compared to a case where $P = 0$ (solid line).

Therefore, for a case where the original image is upscaled by three times, with the setting signal $P$ set to 0.6, the interpolation pixel generation apparatus can generate such interpolation pixels that allowing the resultant upscaled image to be clear and less distorted.

In the case that the upscaling rate is relatively lower as 1.5, the upscaled image is limited to a half of the sampling frequency $(1.5/T)$, i.e., $(0.75/T)$. In such case, the upscaled image may be distorted if $P$ is set to between 0 and 1 as 0.6. This is because attenuation in the region where the frequency is higher than $(1/T)$ is not sufficiently done. Therefore, for a case where the upscaling rate is relatively lower, $P = 1$ is preferable.

Conclusively, by setting $P = 1$ when the upscaling rate is lower (closer to 1) and setting $P$ to a value closer to 0 as the upscaling rate is increased, it becomes possible to obtain the clear and no-distorted upscaled image regardless of the upscaling rate.

As described above, according to this embodiment, when the interpolation pixel(s) to be interpolated between a pair of original pixels are generated, the interpolation curve is preferably so deformed, according to the image upscaling rate, that the slope for the section not in the vicinity of the ends gets steeper as the image upscaling rate gets higher. In this manner, the contours of characters, for example, on the display may not so conspicuously blurred even if the upscaling rate gets higher (i.e., even if the number of interpolation pixels is increased).

Herein, comparison is made between the second embodiment and the third embodiment.

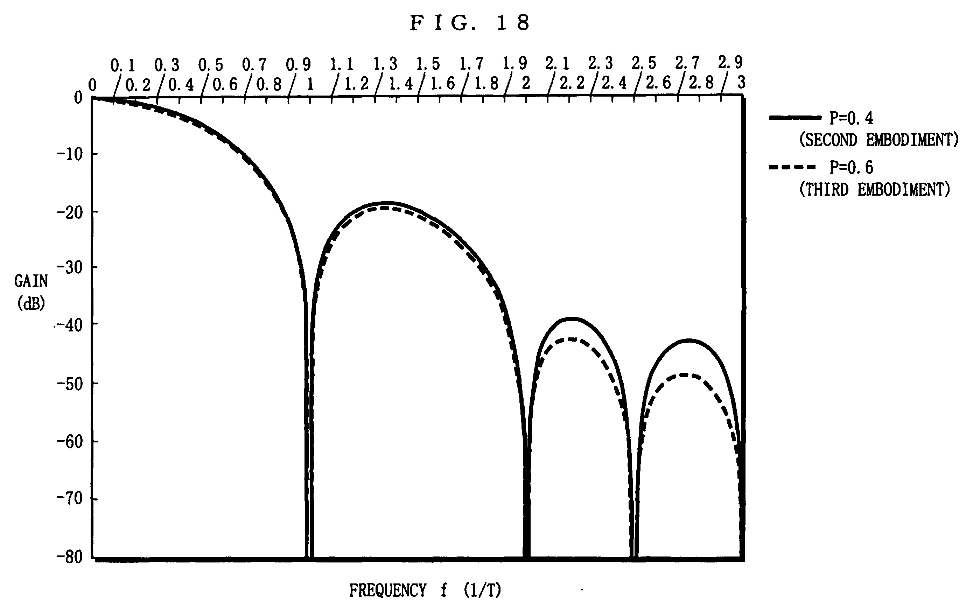

In the third embodiment, with the help of the COS conversion circuit 12, the frequency characteristic is superior to the one in the second embodiment. The reason therefor is described next below by referring to FIG. 18.

FIG. 18 is a graph showing the frequency characteristic for two cases where the setting signal $P$ is set to 0.4 (solid line; equivalent to the dotted line in FIG. 13) in the second embodiment, and where the setting signal $P$ is set to 0.6 (dotted line; equivalent to the dotted line in FIG. 17) in the third embodiment.

In FIG. 18, in the frequency domain where the frequency is lower than $(2/T)$, those two frequency characteristics do not show much difference. In the frequency domain higher than $(2/T)$, however, the gain for the third embodiment is lower. This tells that the upscaled image in the third embodiment is lower in distortion level than the one in the second embodiment. Therefore, the upscaled image in the third embodiment is superior, although slightly, to the upscaled image in the second embodiment.

Conversely, as described in the foregoing, the COS conversion circuit 12 requires a circuit rather large in size as memory. Therefore, cost wise, the second embodiment may be more advantageous than the third embodiment.

INDUSTRIAL APPLICABILITY

As described above, the interpolation pixel generation apparatus of the present invention is capable of generating interpolation pixels to be supplied to a matrix-type display capable of displaying upscaled images so that the contours of characters, for example, on the display are prevented from being conspicuously blurred even if an upscaling rate gets higher.

**Claims**

1. An interpolation pixel generation apparatus for generating an interpolation pixel to be supplied to a matrix-type display capable of displaying an upscaled image for interpolation between a pair of original pixels, the apparatus comprising:

   interpolation curve production means for producing an interpolation curve having said pair of original pixels at ends, and is sloped gradual in the vicinity of the ends but otherwise steep;
   interpolation curve deformation means for deforming said interpolation curve according to an upscaling rate of the image; and
   interpolation pixel calculation means for calculating, by using the interpolation curve deformed by said interpolation curve deformation means, an interpolation pixel for interpolation between said pair of original pixels.

2. The interpolation pixel generation apparatus according to claim 1, wherein said interpolation curve deformation means so deforms said interpolation curve that the slope for a section not in the vicinity of the ends becomes steeper as the image upscaling rate is increased.

3. An interpolation pixel generation apparatus for generating an interpolation pixel to be supplied to a matrix-type display capable of displaying an upscaled image for interpolation between a pair of original pixels, the apparatus comprising:

an interpolation curve production circuit for producing an interpolation curve having said pair of original pixels at ends, and the interpolation curve has no slope for a section in the vicinity of the ends but has a slope of larger than 0 for a section not in the vicinity of the ends;
a deduction circuit for calculating a difference between said pair of original pixels;
a multiplication circuit for multiplying an output from said interpolation curve production circuit and an output from said deduction circuit; and
an addition circuit for adding one of said pair of original pixels and an output from said multiplication circuit, wherein
said interpolation curve production circuit comprises:

a basic signal production circuit for producing a basic signal as a basis of said interpolation curve by accumulating a reciprocal of an image upscaling rate;

a binary circuit for representing an output from said basic signal production circuit in binary;
a linear conversion circuit for subjecting the output from said basic signal production circuit to linear conversion;
a selector for selecting either one of an output from said binary circuit and an output from said linear conversion circuit; and
a section determination circuit for determining said section in the vicinity of the ends and the section not in the vicinity of the ends, and outputting a control signal indicating the determination to said selector.

4. The interpolation pixel generation apparatus according to claim 3, wherein said interpolation curve production circuit further comprises a COS conversion circuit for converting the output from said linear conversion circuit into a cosine curve, and
said selector selects either one of the output from said binary circuit and an output from said COS conversion circuit.

5. The interpolation pixel generation apparatus according to claim 3 or 4, wherein said section determination circuit narrows in width the section not in the vicinity of the ends as the upscaling rate is increased so that the slope for the section becomes steeper.

6. An interpolation pixel generation method for generating an interpolation pixel to be supplied to a matrix-type display capable of displaying an upscaled image for interpolation between a pair of original pixels, the method comprising the steps of:

producing an interpolation curve having said pair of original pixels at ends, and is sloped gradual in the vicinity of the ends but otherwise steep;
deforming said interpolation curve according to an upscaling rate of the image; and
calculating, by using the interpolation curve deformed by said interpolation curve deformation means, an interpolation pixel for interpolation between said pair of original pixels.

7. A recording medium being stored a program to be executed on a computer device to generate an interpolation pixel to be supplied to a matrix-type display capable of displaying an upscaled image for interpolation between a pair of original pixels, the program being for realizing an operational environment comprising the steps of:

producing an interpolation curve having said pair of original pixels at ends, and is sloped gradual in the vicinity of the ends but otherwise steep;
deforming said interpolation curve according to an upscaling rate of the image; and
calculating, by using the interpolation curve deformed by said interpolation curve deforming step, an interpolation pixel for interpolation between said pair of original pixels.

8. A program supply method for supplying a program to be executed on a computer device over a network to generate an interpolation pixel to be supplied to a matrix-type display capable of displaying an upscaled image for interpolation between a pair of original pixels, the program being for realizing an operational environment comprising the steps of:

producing an interpolation curve having said pair of original pixels at ends, and is sloped gradual in the vicinity of the ends but otherwise steep;

interpolation curve deformation means for deforming said interpolation curve according to an upscaling rate of the image; and

interpolation pixel calculation means for calculating, by using the interpolation curve deformed by said interpolation curve deformation means, an interpolation pixel for interpolation between said pair of original pixels.

# F I G. 1

```
          20              21              22
X0 →  INTERPOLATION   INTERPOLATION   INTERPOLATION
      CURVE           CURVE           PIXEL
X1 →  PRODUCING    →  DEFORMING    →  CALCULATING  → x1, x2, ···
      PART            PART            PART
```

# F I G. 2

```
              30                    32
          ┌────────┐           ┌──────────┐
          │  CPU   │           │ PROGRAM  │
          │        │           │ MEMORY   │
          └───┬────┘           └────┬─────┘
X0, X1 →──────┼─────────────────────┼──────────── → x1, x2, ···
          ┌───┴────┐
          │  RAM   │— 31
          └────────┘
```

FIG. 3

```
                    ( START )
                        │
                        ▼
        ┌───────────────────────────────┐
        │  SELECT A PAIR OF ORIGINAL     │─── S101
        │  PIXELS IN X DIRECTION         │
        └───────────────────────────────┘
                        │
                        ▼
        ┌───────────────────────────────┐
        │  PRODUCE INTERPOLATION CURVE   │─── S102
        └───────────────────────────────┘
                        │
                        ▼
        ┌───────────────────────────────┐
        │  DEFORM INTERPOLATION CURVE    │─── S103
        └───────────────────────────────┘
                        │
                        ▼
        ┌───────────────────────────────┐
        │  CALCULATE INTERPOLATION PIXEL │─── S104
        └───────────────────────────────┘
                        │
                        ▼
                 INTERPOLATION                S105
          N   PIXEL GENERATED FOR EVERY
              PAIR OF ORIGINAL PIXELS
                 IN X DIRECTION ?
                        │ Y
                        ▼
        ┌───────────────────────────────┐
        │  SELECT A PAIR OF ORIGINAL     │─── S106
        │  PIXELS IN Y DIRECTION         │
        └───────────────────────────────┘
                        │
                        ▼
        ┌───────────────────────────────┐
        │  PRODUCE INTERPOLATION CURVE   │─── S107
        └───────────────────────────────┘
                        │
                        ▼
        ┌───────────────────────────────┐
        │  DEFORM INTERPOLATION CURVE    │─── S108
        └───────────────────────────────┘
                        │
                        ▼
        ┌───────────────────────────────┐
        │  CALCULATE INTERPOLATION PIXEL │─── S109
        └───────────────────────────────┘
                        │
                        ▼
                 INTERPOLATION                S110
          N   PIXEL GENERATED FOR EVERY
              PAIR OF ORIGINAL PIXELS
                 IN Y DIRECTION ?
                        │ Y
                        ▼
                    ( END )
```

# F I G. 4

# F I G. 5

(1)

SIGNAL VALUE

X1

X0

LOCATION

(2)

SIGNAL VALUE

X1

X0

LOCATION

(3)

SIGNAL VALUE

X1

X0

LOCATION

# F I G. 6

(1)

(2)

(3)

F I G. 7

X1

X0

- 1

X1−X0

- 2

k(X1−X0)

- 3

Y=X0+k(X1−X0)

k

INTERPOLATION CURVE PRODUCTION CIRCUIT
4

CLK  R  M  P

EP 1 063 613 A1

# F I G. 8

$b=(2a-1+P)/(2P)$

$d = \begin{cases} 0\,(a<1/2) \\ 1\,(a \geqq 1/2) \end{cases}$

$e = \begin{cases} 1 \Longrightarrow (1-P)/2 < a < (1+P)/2 \\ 0 \Longrightarrow 0 \leqq a \leqq (1-P)/2,\quad (1+P)/2 \leqq a \leqq 1 \end{cases}$

# F I G. 9

# F I G. 1 0

F I G. 1 1

F I G. 1 2

$$h(t) = \begin{cases} 0 \Rightarrow |t| > (T+PT)/2 \\ -(t/PT)+(T+PT)/(2PT) \Rightarrow (T-PT)/2 \leqq |t| \leqq (T+PT)/2 \end{cases}$$

$$H(f) = T(\sin(\pi fT)/(\pi fT)) \times (\sin(\pi fPT)/(\pi fPT))$$

22

F I G. 13

EP 1 063 613 A1

FIG. 14

$$b = (2a-1+P)/(2P) \qquad c = (1-\cos(\pi b))/2$$

```
┌──────────────┐         ┌──────────────┐         ┌──────────────┐
│ BASIC SIGNAL │    a    │ LINEAR       │         │ COS CONVERSION│
│ PRODUCTION   │─────────│ CONVERSION   │─────────│ CIRCUIT      │
│ CIRCUIT      │         │ CIRCUIT      │         │              │
└──────────────┘         └──────────────┘         └──────────────┘
   ↑    ↑    ↑               6      P                    12
  CLK   R    M
```

5

6

7

12

8

k

$$d = \begin{cases} 0 \ (a < 1/2) \\ 1 \ (a \geqq 1/2) \end{cases}$$

BINARY CIRCUIT

9

SECTION DETERMINATION CIRCUIT

$$e = \begin{cases} 1 \Rightarrow (1-P)/2 < a < (1+P)/2 \\ 0 \Rightarrow 0 \leqq a \leqq (1-P)/2, \quad (1+P)/2 \leqq a \leqq 1 \end{cases}$$

# F I G. 1 5

# F I G. 1 6

$$j(t) = \begin{cases} 0 & |t| > (T+PT)/2 \\ \cos^2(\pi (t+T/2-PT/2)/(2PT)) & -(T+PT)/2 \leqq t \leqq -(T-PT)/2 \\ \cos^2(\pi (t+T/2+PT/2)/(2PT)) & (T-PT)/2 \leqq t \leqq (T+PT)/2 \\ 1 & |t| < (T-PT)/2 \end{cases}$$

$$J(f) = T\cos(\pi fPT)\sin(\pi fT)/(\pi fT)/(1-(2fPT)^2)$$

# F I G.  1 7

FREQUENCY  f  (1/T)

GAIN
(dB)

P=0

P=1

P=0. 6

EP 1 063 613 A1

# F I G.  1 8

FREQUENCY f (1/T)

GAIN (dB)

——— P=0.4
(SECOND EMBODIMENT)

- - - - P=0.6
(THIRD EMBODIMENT)

EP 1 063 613 A1

# F I G. 1 9

# FIG. 20

F I G .  2 1

(1)

SIGNAL VALUE

X1

X0

LOCATION

⇒

SIGNAL VALUE

1 DOT

(2)

SIGNAL VALUE

X1

X0

LOCATION

⇒

SIGNAL VALUE

1 DOT

(3)

SIGNAL VALUE

X1

X0

LOCATION

⇒

SIGNAL VALUE

1 DOT

## INTERNATIONAL SEARCH REPORT

| | International application No. |
|---|---|
| | PCT/JP99/00635 |

**A. CLASSIFICATION OF SUBJECT MATTER**
Int.Cl⁶ G06T3/40

According to International Patent Classification (IPC) or to both national classification and IPC

**B. FIELDS SEARCHED**

Minimum documentation searched (classification system followed by classification symbols)
Int.Cl⁶ G06T3/40, H04N1/393, G09G5/36

Documentation searched other than minimum documentation to the extent that such documents are included in the fields searched

| Jitsuyo Shinan Koho | 1926-1996 | Toroku Jitsuyo Shinan Koho | 1994-1999 |
|---|---|---|---|
| Kokai Jitsuyo Shinan Koho | 1971-1999 | Jitsuyo Shinan Toroku Koho | 1996-1999 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 8-287244, A (Hitachi,Ltd., Hitachi Device Engineering Co., Ltd.), 1 November, 1996 (01. 11. 96) (Family: none) | 1-8 |
| A | JP, 9-27902, A (Fuji Photo Film Co., Ltd.), 28 January, 1997 (28. 01. 97) & US, 5726766, A | 1-8 |
| A | JP, 9-326921, A (Matsushita Electric Industrial Co., Ltd.), 16 December, 1997 (16. 12. 97) (Family: none) | 1-8 |

☐ Further documents are listed in the continuation of Box C.   ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | |
| "O" | document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| 8 April, 1999 (08. 04. 99) | 20 April, 1999 (20. 04. 99) |

| Name and mailing address of the ISA/ | Authorized officer |
|---|---|
| Japanese Patent Office | |
| Facsimile No. | Telephone No. |

Form PCT/ISA/210 (second sheet) (July 1992)